# EUROPEAN PATENT APPLICATION

(11) **EP 4 154 955 A1**
(43) Date of publication of application: **29.03.2023**
(21) Application number: 20936640.0
(22) Date of filing: 20.05.2020
(51) Int. Cl.: A63F 13/00

(54) **GAME SYSTEM DISPLAYING HISTORICAL RECORDED IMAGES OF RANDOM ODDS**

(71) Applicant: Hsu, Tien Shu, Taichung City (TW)
(72) Inventor: HSU, Shun Tsung, Taichung City Taiwan (TW); WANG, Chang Yi, Taichung City Taiwan (TW); LAI, Ying Tse, Taichung City Taiwan (TW)
(74) Representative: 2K Patentanwälte Blasberg Kewitz & Reichel
(86) International application number: PCT/CN2020/091399
(87) International publication number: WO 2021/232317

(57) **Abstract**

A game system displaying historical recorded images of random odds: operation information generated by a player that operates a game operation interface (12) is obtained by means of a game processing unit (70), and when it is determined accordingly that the player wants to view a random odds history record, a random odds record capturing unit (50) is controlled to capture corresponding data of game history information to generate the random odds history record, and display the random odds history record on a display screen (11); and the game processing unit (70) further determines whether the player wants to end the viewing of the random odds history record according to the latest operation information so as to determine whether the display screen (11) ends the displaying of the random odds history record, and when it is determined that the time for a bet has ended, the game is resumed. Accordingly, the random odds history record may be provided to players to browse through as a reference for betting points, and the browsing time may be limited, which effectively improves the operating efficiency of the game system and may be used for multiplayer online games.

## Description

### FIELD OF THE INVENTION

The invention relates to a game system with random odds, in particular to a game system capable of displaying a random odds historical record.

### BACKGROUND OF THE INVENTION

A game console (system) does not need a dealer, has no space for human cheating, and the cost of manufacturing and management thereof is low, such that it can be suitable for various games such as a slot machine, a poker game, a Sic bo, a roulette wheel and the like. The cost for players playing is also low, and the game console (system) is suitable for a single game and a multi-player online game, and widely welcomed by players and practitioners.

However, the game console lacks the sense of interaction with a real dealer, and a long-time game may have a sense of boredom, so a plurality of playing methods may be designed to enhance the attraction of players. US Patent No. 9,646,459 discloses a bonus apparatus for a game system that may be used to increase the odds of the game system. The method mainly comprises the steps of randomly selecting a fixed quantity from a plurality of game results and respectively generating a variably raised odds by using a component for calculating variably raised odds, immediately correspondingly displaying the variably raised odds on an electronic display board, and enabling the payout component to select the odds, preferentially to select the variably raised odds to pay the player for betting on the game result. According to this, it is possible to increase the return to player (RTP), making it desirable for the player to obtain a higher bonus, while increasing the attraction of the game system, thereby increasing the usage rate of the game system.

The above patents are directed to increasing the attraction of game system by increasing the return to player (RTP), which directly sacrifices business interests of the practitioners. For practitioners, a too high return to player (RTP) can increase business, but it does not help business interests. Therefore, in order to ensure the business benefit of the practitioner, the occurrence probability and the numerical value of the variably raised odds must be accurately calculated, so that the number of times that the variably raised odds occur in a game system in an actual game playing process is limited, a player cannot know the existence of the variably raised odds at all in a short time, and the effect of attracting the player cannot be fully exerted.

### SUMMARY OF THE INVENTION

The invention is mainly directed to disclose a game system capable of displaying a random odds historical record, which enables a player to browse the random odds historical record in a limited time to serve as a wager reference so as to improve the wager willingness of the player.

To achieve the above object, the present invention provides a game system displaying historical record images of random odds for at least one player to play a game. The game system comprises at least one display screen corresponding to the at least one player, at least one game operation interface corresponding to the at least one player, a game result generation unit, a random multiplying factor generation unit, a data storage unit, and a random odds record acquisition unit, a payout unit and a game processing unit.

Each of the at least one display screens displays a game image of the game, and the game image comprises a plurality of wager zones and a plurality of odds corresponding to the plurality of wager zones. Each of the at least one game operation interface is configured for being operated by the player to generate an operation information, each of the at least one game operation interface comprises a plurality of wager options corresponding to the plurality of wager zones, a historical record option and at least one additional function operation option, and the operation information comprises a function control signal and a wager data, the function control signal is generated by the player operating at least one of the historical record option and the at least one additional function operation option, and the wager data is generated by the player operating the plurality of wager options and limited within a wager time. In each round of the game, the random multiplying factor generation unit respectively generates a random odds for each of the plurality of wager zones according to a probability after the wager time is over, and the random odds which is generated by the random multiplying factor generation unit correspondingly replaces the odds of the wager zone. The game result generation unit is configured for generating a game result in each round of the game, wherein the game result corresponds to at least one of the plurality of wager zones. The data storage unit is configured for storing the game result, the random odds and the wager zone corresponding to the random odds of each round of the game to generate a game historical information; The random odds record acquisition unit is configured for acquiring corresponding data of the game historical information according to the function control signal to generate a random odds historical record. The payout unit is configured for paying the players according to the wager data, the game result, the plurality of odds and the random odds of different players. The game processing unit is configured for being connected with the at least one display screen, the at least one game operation interface, the game result generation unit, the random multiplying factor generation unit, the data storage unit, the random odds record acquisition unit and the payout unit.

The game processing unit executes steps S1-S11 for each of the players, which are described below.

Step S1: an operation information acquiring step. continuously acquiring the operation information generated by the player operating the game operation interface.

Step S2: a historical record calling judgment step, judging whether the player will read the random odds historical record according to the function control signal of the operation information; if so, executing a step S3; and if not, executing a step S8.

Step S3: a game historical information generation step, generating the random odds historical record corresponding to the function control signal by the random odds record acquisition unit, and continuing to execute a step S4.

Step S4: a record display step, displaying the random odds historical record by the display screen and continuing to execute a step S5.

Step S5: a wager time judgment step, judging whether the wager time is over; if so, executing a step S9, and if not, executing a step S6.

Step S6: a historical record finishing judgment step for judging whether to finish reading the random odds historical record according to the operation information latest generated; if so, executing a step S7; and if not, executing the step S4.

Step S7: a historical information display finishing step, enabling the display screen to finish displaying the random odds historical record, and continuing to execute the step S1.

Step S8: a wager time judgment step for judging whether the wager time is over; if so, executing a step S9; and if not, executing the step S1.

Step S9: a random odds generation step for respectively generating the random odds according to the probability for each of the plurality of wager zones by the random multiplying factor generation unit, and continuing to execute a step S10.

Step S10: a game result generation step for generating the game result by the game result generation unit, and continuing to execute a step S11.

Step S11: a payout step for paying the players by the payout unit, and continuing to execute the step S1.

Accordingly, when the present invention judges that the player will read the random odds historical record in the wager time, the random odds historical record is provided for the player to browse as a wager reference, so that the wager willingness of the player is improved; and running efficiency of a single game system is effectively improved by limiting the browsing time, and it is applicable to a multi-player online game.

### BRIEF DESCRIPTION OF THE DRAWINGS

Fig. 1 is a schematic diagram of a system architecture of the present invention.
Figs. 2A is a schematic diagram of a game image of the present invention.
Figs. 2B is a schematic diagram of a game image of the present invention.
Figs. 2C is a schematic diagram of a game image of the present invention.
Figs. 2D is a schematic diagram of a game image of the present invention.
Fig. 3 is a flow chart of an operation process of the present invention.

### DETAILED DESCRIPTION OF THE PREFERRED EMBODIMENTS

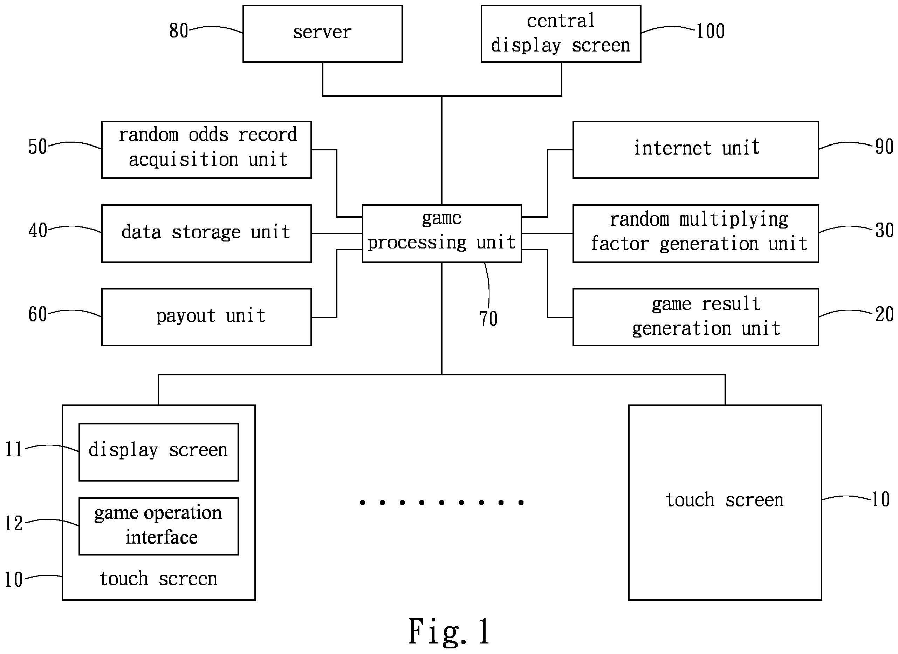

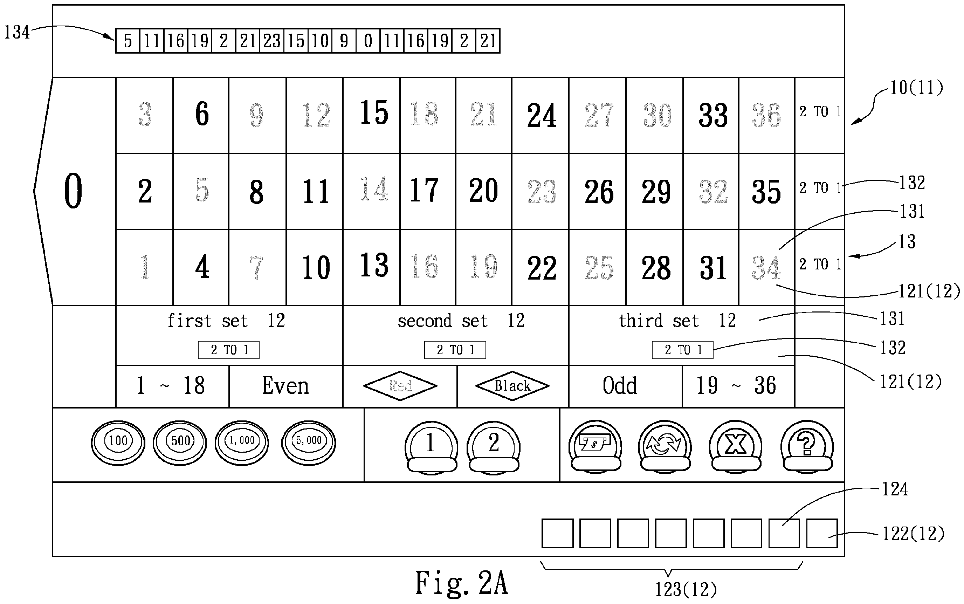

The detailed description and technical contents of the present invention will now be described with reference to the drawings as follows:
Referring to Figs. 1 and 2A, the present invention provides a game system displaying historical record images of random odds for at least one player to play a game, and the game system comprises at least one touch screen 10, a game result generation unit 20, a random multiplying factor generation unit 30, a data storage unit 40, a random odds record acquisition unit 50, a payout unit 60 and a game processing unit 70. In an embodiment, the game system further comprises a server 80, an internet unit 90, and a central display screen 100. The at least one touch screen 10 comprises a display screen 11 corresponding to the at least one player and a game operation interface 12 corresponding to the at least one player, respectively. The game operation interface 12 set correspondingly to the player is a graphical interface and is implemented in combination with the display screen 11 set correspondingly to the player, and each of the touch screens 10 is operable by one of the players to play the game. Each of the display screens 11 displays a game image 13 of the game, the game image 13 includes a plurality of wager zones 131 and a plurality of odds 132 corresponding to the plurality of wager zones 131, and only a portion of the odds 132 are displayed for the sake of simplicity in the display picture.

The game processing unit 70 is connected to the at least one touch screen 10 (the at least one display screen 11, the at least one game operation interface 12), the game result generation unit 20, the random multiplying factor generation unit 30, the data storage unit 40, the random odds record acquisition unit 50, the payout unit 60, the server 80, the internet unit 90, and the central display screen 100.

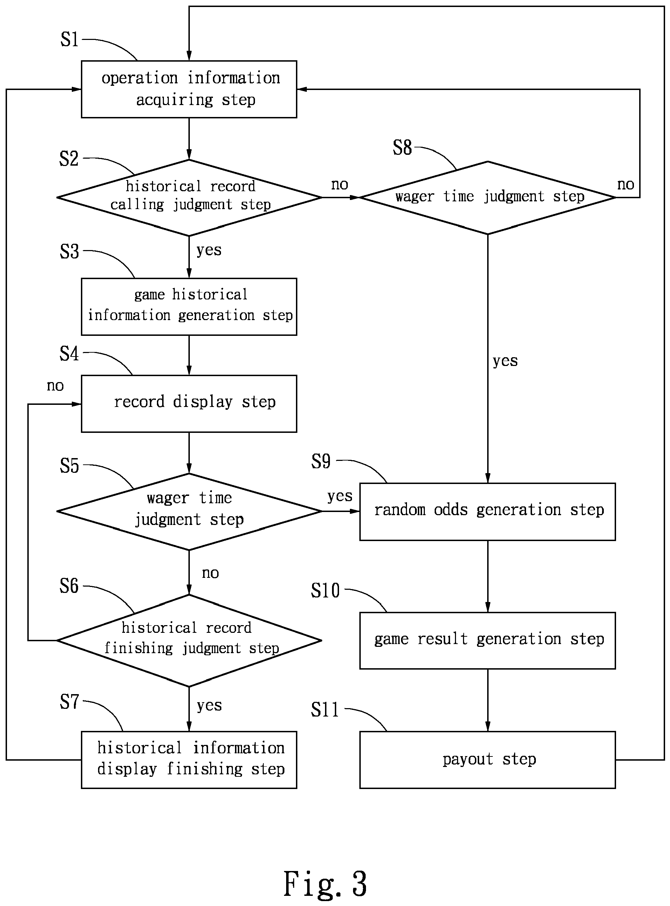

Referring to Fig. 3, the game processing unit 70 executes the following steps for each of the players: step S1, an operation information acquiring step; step S2, a historical record calling judgment step; step S3, a game historical information generation step; step S4, a record display step; step S5, a wager time judgment step; step S6, a historical record finishing judgment step; step S7, a historical information display finishing step; step S8, a wager time judgment step; step S9, a random odds generation step; step S10, a game result generation step; and step S11, a payout step.

Each of the game operation interfaces 12 is operable by the player to generate an operation information. The step S1 continuously acquires the operation information generated by the player operating the game operation interface 12. As shown in Fig. 2A, each of the game operation interface 12 includes a plurality of wager options 121 corresponding to the plurality of wager zones 131, a historical record option 122, and at least one additional function operation option 123. The operation information comprises a function control signal and a wager data, the function control signal is generated by the player operating at least one of the historical record option 122 and the at least one additional function operation option 123, and the wager data is generated by the player operating the plurality of wager options 121 and limited within a wager time.

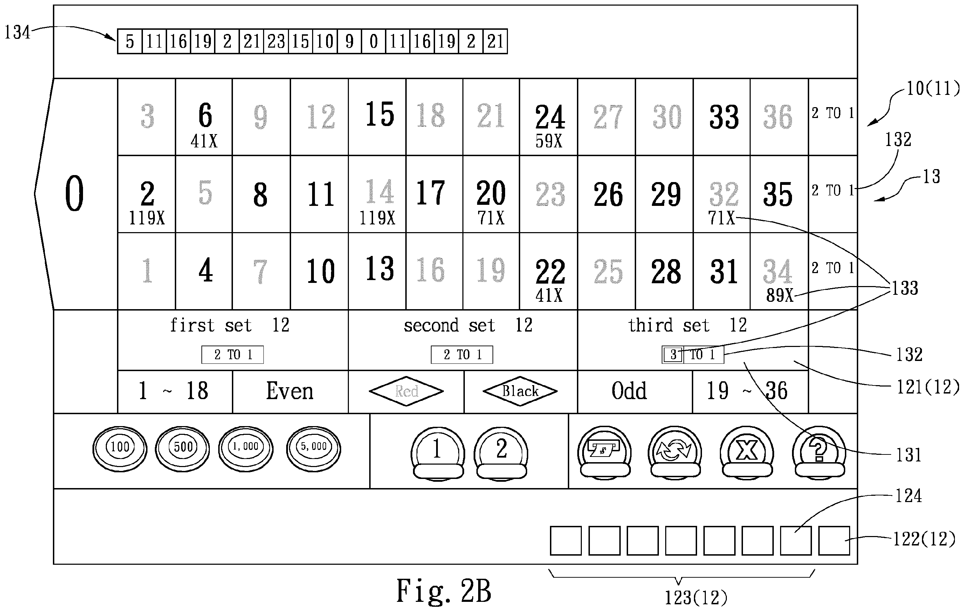

Referring to Fig. 2B, in each round of the game, the random multiplying factor generation unit 30 generates a random odds 133 according to a probability for each of the wager zones 131 respectively, after the wager time is over. The so call "generate according to the probability" means that the random multiplying factor generation unit 30 generates the random odds 133 by the probability (may not be generated) according to a game rule, and the random odds 133 generated may correspondingly replaces the odds 132 of the wager zone 131. On the game image 13, the random odds 133 directly covers the odds 132 or be displayed on the wager option 121 (on the touch screen 10).

The game result generation unit 20 is configured for generating a game result in each turn of the game, wherein the game result corresponds to at least one of the plurality of wager zones 131. That is, the game result corresponds to at least one of the wager zones 131, and the wager zone 131 to which the game result corresponds is the wager zone 131 which is won.

The data storage unit 40 is configured for storing the game result, the random odds 133 generated and the wager zone 131 corresponding to the random odds 133 of each round of the game to generate a game historical information.

The random odds record acquisition unit 50 is configured for acquiring corresponding data of the game historical information according to the function control signal to generate a random odds historical record. The random odds historical record is generated based on the function control signal generated by operation of the player. The step S2 judges whether the player will read the random odds historical record according to the function control signal of the operation information; if so, the step S3 is executed; and if not, the step S8 is executed. The step S3 generates the random odds historical record corresponding to the function control signal by the random odds record acquisition unit 50, and the step S4 is continued to be executed. The step S4 displays the random odds historical record by the display screen 11, and the step S5 is continued to be executed.

With respect to the step S2, the implementation of the historical record calling judgment step is further described below.

A first embodiment is described first, with reference to Fig. 2A, in an embodiment, since the game image 13 includes the game historical result 134, and the game operation interface 12 is implemented in combination with the display screen 11 to form the touch screen 10 for displaying the game image 13. Therefore, the game historical result 134 is also used as the historical record option 122. That is, the function control signal is generated by the player selecting the game historical result 134 (equivalent to selecting the historical record option 122) and the function control signal enables the step S2 to judge the player will read the random odds historical record accordingly.

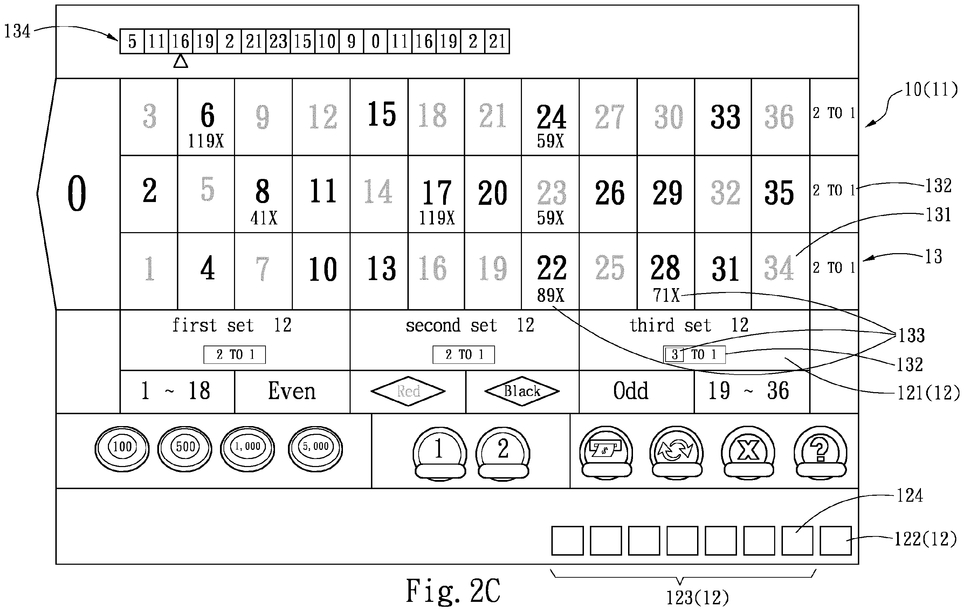

Next, in a second embodiment, the function control signal generated by the player selecting the historical record option 122 enables the step S2 to judge that the player will read the random odds historical record accordingly, and to generate the random odds historical record in accordance with the player's needs. As described in detail below, referring to Fig. 2C, in an embodiment, the game image 13 includes game historical results 134 of past games, and the game historical results 134 lists the plurality of game results. When the player presses the historical record option 122 and then selects any one of the game results of the game historical results 134 (the selected item is represented by triangle, as shown in Fig. 2C, such as the game result "16" is selected), the game image 13 displays the random odds historical record. That is, the game image 13 reproduces the round with the result "16", and the random odds 133 appear on the wager zones 131, thereby providing a reference to the player.

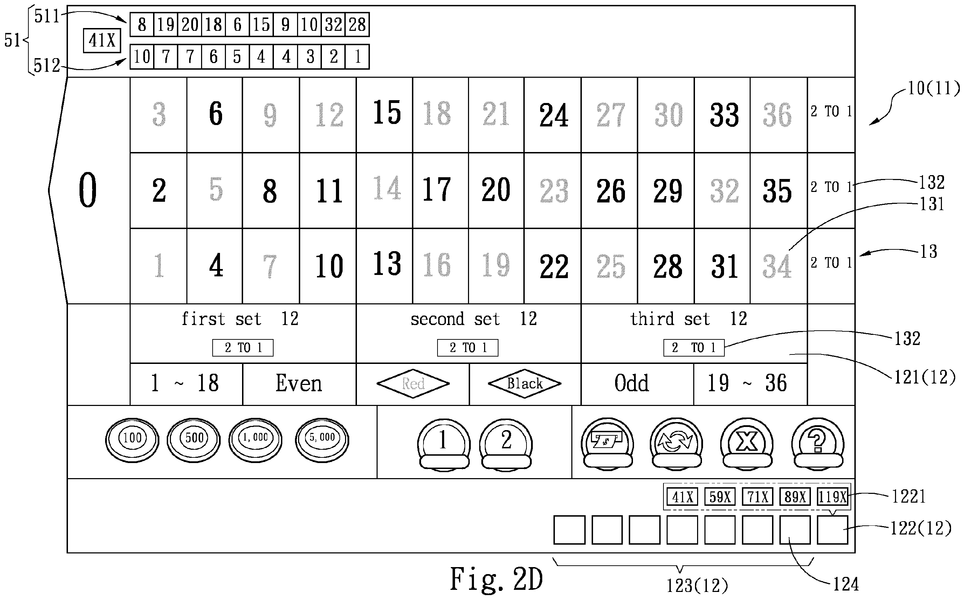

In a third embodiment, referring to Fig. 2D, in another embodiment, when the random odds 133 (shown in Fig. 2B) on the wager option 121 are limited to be generated among the multiples 41X, 59X, 71X, 89X, and 119X, the historical record option 122 further shows an option 1221 for the multiples 41X, 59X, 71X, 89X, and 119X for selection while the player presses the historical record option 122. When the player selects any one of the multiples, e.g., a multiple 41X, the game image 13 presents a random odds historical record, i.e., a count 51 of the multiple (41X) the player selected. The count 51 comprise a wager zone pattern 511 and a quantity 512; wherein the wager zone pattern 511 is a number corresponding to different wager zones 131, and the quantity 512 is an accumulated number of times that the multiple 41X appears in the different wager zones 131; that is, the player can clearly know the accumulated number of times that the multiple (multiple 41X) selected appears in different wager zones 131. Also, in order to recognize conveniently, portions of the count 51 (the random odds historical record) associated with the different wager zones 131 are represented in different colors, i.e., the colors of the different wager zones 131 are different on the game image 13.

The step S5 judges whether the wager time is over; if so, a step S9 is executed; and if not, the step S6 is executed. The step S6 judges whether to finish reading the random odds historical record according to the operation information latest generated; if so, a step S7 is executed, and if not, the step S4 is executed. The step S7 enables the display screen 11 to finish displaying the random odds historical record, and the step S1 is continued to be executed. The step S8 judges whether the wager time is over; if so, a step S9 is executed; and if not, the step S1 is executed. The step S9 respectively generates the random odds 133 according to the probability for each of the wager zones 131 by the random multiplying factor generation unit 30, and a step S10 is executed. The step S10 generates the game result by the game result generation unit 20, and a step S11 is continued to be executed.

With regard to the step S6, the implementation of the historical record finishing judgment step is further described below.

When the player selects any one of the plurality of wager options 121 and the at least one additional function operation option 123 in the game operation interface 12 to generate the operation information, the step S6 is caused to judge to finish reading the random odds historical record accordingly. That is, when the player selects the wager option 121 or the at least one additional function operation option 123 to generate the operation information accordingly, the step S6 judges that the player will finish reading the random odds historical record.

Referring to Figs. 2A, 2B, 2C, and 2D, in another embodiment, the at least one additional function operation option 123 comprises a return button 124. When the player selects the return button to generate the function control signal, the step S6 is caused to judge to finish reading the random odds historical record accordingly.

The step S11 pays the player by the payout unit 60, and the S1 is continued to be executed. The payout unit 60 is configured for paying the player according to the wager data, the game result, the plurality of odds 132 and the random odds 133 of different players.

In addition, the internet unit 90 is connected to an internet to be connected to an external networking device (not shown), so that the server 80 transmits the game result and the random odds historical record of the game over the internet, i.e., with the external networking device, thereby forming a multi-player online game. The central display screen 100 is configured for displaying related game images .

In summary, the game system of the present invention is applied to games including, but not limited to, a slot machine, a poker game, a Sic bo and a roulette wheel and the like. Due to different games, game operation interfaces, game images, and the like will be changed appropriately depending on the characteristics of games. In order to allow the player to operate the game operation interface according to the demand within the wager time to generate the corresponding function control signal to let the random odds record acquisition unit 50 acquires the corresponding random odds historical record for the player to browse the random odds historical record in a limited time, and then the player can clearly master the game historical results 134 in the past game, and can acquire the random odds historical record which is statistically analyzed, thereby improving the wager willingness of the player.

In summary, the invention includes at least the following characteristics.
1. According to the invention, when it is judged that the player will read the random odds historical record in the wager time, the random odds historical record can be provided for the player to browse as a wager reference so as to improve the wager willingness of the player.
2. Running efficiency of the game system can be effectively improved by limiting the browsing time.
3. It is applicable for a multi-player online game and meets the use requirements of the multi-player online game.

## Claims

1. A game system displaying historical record images of random odds for at least one player to play a game, comprising:
at least one display screen (10), corresponding to the at least one player, wherein each of the at least one display screen (11) displays a game image (13) of the game, and the game image (13) comprises a plurality of wager zones (131) and a plurality of odds (132) corresponding to the plurality of wager zones (131);
at least one game operation interface (12), corresponding to the at least one player, wherein each of the at least one game operation interface (12) is configured for being operated by the player to generate an operation information, each of the at least one game operation interface (12) comprises a plurality of wager options (121) corresponding to the plurality of wager zones (131), a historical record option (122) and at least one additional function operation option (123), and the operation information comprises a function control signal and a wager data; the function control signal is generated by the player operating at least one of the historical record option (122) and the at least one additional function operation option (123), and the wager data is generated by the player operating the plurality of wager options (121) and limited within a wager time;
a random multiplying factor generation unit (30), wherein in each round of the game, the random multiplying factor generation unit (30) respectively generates a random odds (133) for each of the plurality of wager zones (131) according to a probability after the wager time is over, and the random odds (133) which is generated by the random multiplying factor generation unit (30) correspondingly replaces the odds of the wager zone (131);
a game result generation unit (20), configured for generating a game result in each round of the game, wherein the game result corresponds to at least one of the plurality of wager zones (131);
a data storage unit (40), configured for storing the game result, the random odds (133) and the wager zone (131) corresponding to the random odds (133) of each round of the game to generate a game historical information;
a random odds record acquisition unit (50), configured for acquiring corresponding data of the game historical information according to the function control signal to generate a random odds historical record;
a payout unit (60), configured for paying the at least one player according to the wager data, the game result, the plurality of odds (132) and the random odds (133) of different players;
a game processing unit (70), configured for being connected with the at least one display screen (11), the at least one game operation interface (12), the game result generation unit (20), the random multiplying factor generation unit (30), the data storage unit (40), the random odds record acquisition unit (50) and the payout unit (60), and executing following steps for each of the players:
step S1: an operation information acquiring step, continuously acquiring the operation information generated by the player operating the game operation interface (12);
step S2: a historical record calling judgment step, judging whether the player will read the random odds historical record according to the function control signal of the operation information; if so, executing a step S3, and if not, executing a step S8;
step S3: a game historical information generation step, generating the random odds historical record corresponding to the function control signal by the random odds record acquisition unit (50), and continuing to execute a step S4;
step S4: a record display step, displaying the random odds historical record by the display screen (11) and continuing to execute a step S5;
step S5: a wager time judgment step, judging whether the wager time is over; if so, executing a step S9, and if not, executing a step S6;
step S6: a historical record finishing judgment step, judging whether to finish reading the random odds historical record according to the operation information latest generated; if so, executing a step S7; and if not, executing the step S4;
step S7: a historical information display finishing step, enabling the display screen (11) to finish displaying the random odds historical record, and continuing to execute the step S1;
step S8: a wager time judgment step, judging whether the wager time is over; if so, executing a step S9; and if not, executing the step S1;
step S9: a random odds generation step, respectively generating the random odds (133) according to the probability for each of the plurality of wager zones (131) by the random multiplying factor generation unit (30), and continuing to execute a step S10;
step S10: a game result generation step, generating the game result by the game result generation unit (20), and continuing to execute a step S 11; and
step S11: a payout step, paying the player by the payout unit (60), and continuing to execute the step S1.

2. The game system of claim 1, wherein the game system further comprises a server (80), an internet unit (90) and a central display screen (100) connected to the game processing unit (70), and wherein the internet unit (90) is configured to be connected to an internet to allow the server (80) to transmit the game result and the random odds historical record over the internet, and the central display screen (100) is configured to display the game image.

3. The game system of claim 1, wherein portions of the random odds historical record associated with different wager zones (131) are represented in different colors.

4. The game system of claim 1, wherein the game operation interface (12) is a graphical interface and is implemented in combination with the display screen (11) to form a touch screen (10).

5. The game system of claim 4, wherein the game image comprises a game historical result (134), the game historical result (134) is configured as the historical record option, and the function control signal generated by the player selecting the game historical result (134) enables the step S2 to judge that the player will read the random odds historical record accordingly.

6. The game system of claim 1, wherein when the player selects any one of the plurality of wager options (121) and the at least one additional function operation option (123) in the game operation interface (12) to generate the operation information, the step S6 is caused to judge to finish reading the random odds historical record accordingly.

7. The game system of claim 1, wherein the function control signal generated by the player selecting the historical record option enables the step S2 to judge the player will read the random odds historical record accordingly.

8. The game system of claim 1, wherein the at least one additional function operation option (123) comprises a return button (124), and when the player selects the return button (124) to generate the function control signal, the step S6 is caused to judge to finish reading the random odds historical record accordingly.
